# EUROPÄISCHE PATENTSCHRIFT

(11) **EP 1 090 669 B1**
(45) Veröffentlichungstag und Bekanntmachung des Hinweises auf die Patenterteilung: **15.12.2004**
(21) Anmeldenummer: 00810769.0
(22) Anmeldetag: 28.08.2000
(51) Int. Cl.: B01D 51/10, B01D 53/14, F28C 3/08

(54) **Gaskühler**
Gas cooler
Refroidisseur de gaz

(30) Priorität: 22.09.1999 CH 173299
(43) Veröffentlichungstag der Anmeldung: 11.04.2001
(73) Patentinhaber: MS-Technologie GmbH, 3415 Hasle-Rüegsau (CH)
(72) Erfinder: Schumacher, Martin, 3415 Hasle-Rüesgau (CH)
(74) Vertreter: Arato, Laszlo

(56) Entgegenhaltungen:
- DE-A- 19 622 976
- US-A- 3 364 982

## Beschreibung

Die Erfindung betrifft eine Vorrichtung zur Optimierung der Bauweise und des Betriebes von Pfeifbündelquenchern, die als Gaskühler der Rauchgasreinigung dienen, nach dem Oberbegriff von Anspruch 1, sowie ein Verfarhren nach Anspruch 9.

Aus der DE 33 12 584 ist eine Quenchkammer-Einrichtung mit einem Tauchrohr zum Abkühlen eines heissen Synthesegases bekannt, das Partikel aus Asche und Holzkohle enthält. Das Synthesegas wird durch eine Kontaktzone mit der Kühlflüssigkeit geführt, die in Form eines Films an den Wandungen eines Tauchrohrs abwärts fliesst und das Gas umgibt. Ausserdem wird Kühlfüssigkeit zur Abkühlung der Teilchen als Spray in das strömende Synthesegas eingesprüht. Aus der US-3,364,982 ist ein Rohrbündelquencher der Säureherstellung und aus der DE 196 22 976 A1 ein Pfeifen- bzw. Rohrbündelquencher der Rauchgasreinigung mit fallender Filmkühlung bekannt. Rohrbündelquencher bestehen aus einer querschnittabhängigen Anzahl von Röhren, die in einem Boden eingebunden und von einem Behältermantel eingefasst sind. Im Betrieb wird über dem Pfeifenboden im grossen Überschuss Kühlflüssigkeit zugegeben, die zwischen den Röhren nach oben steigt und über die Einlaufkronen der Röhren mit dem heissen Gas zusammen in die Pfeifenröhre fliesst. Das von oben zugeführte heisse Gas wird beim Eintritt in die Pfeifenröhren, bei der durch die Röhren bedingten Querschnittsverengung beschleunigt und reisst die mitströmende Kühlflüssigkeit unter starker Verwirbelung mit. Hierbei wird eine Teilmenge der Flüssigkeit schlagartig verdampft, wobei der Gasstrom auf die erstrebte Kühlgrenztemperatur fällt.

Nachteile solcher Vorrichtungen ergeben sich insbesondere aus dem hohen Baugewicht und den geringen Schlagbruchfestigkeit des Baumaterials, das aus Gründen der Korrosionsbeständigkeit bei erhöhten Temperaturen vorwiegend Graphit ist. Die Montage solcher Geräte ist aufwendig, weil für die Gewährleistung der Dichtigkeit im Betrieb der Einbau unter Zugspannung erfolgen muss. Das zu erreichen, ist aber nur mit Sonderbefestigungen für das Einspannen des Gerätes zwischen passende Flanschen mittels Zugankerstangen und Vorspannfedern möglich. Der Einbau unter Zugspannung ist wegen der bereits erwähnten Sprödigkeit des Materials riskant, da bei Ungleichmässigkeiten der Spannungsverteilung die Gefahr des Gerätebruches besteht. Zur Kühlung der Rauchgase auf Kühlgrenztemperatur vor Eintritt in den Nassgasabsorber sind daher anstelle des teueren Graphites Rohrbündelpfeifenquencher aus Glasfaser-Kunstharzaufbau vorgeschlagen worden.

Wesentlicher Nachteil aller genannten Gaskühler ist, dass sie nicht für die realen, sondern für idealisierte Betriebsparameter ausgelegt und gebaut sind. Ausserdem müssen sie so aufgestellt werden, dass die Überlaufkanten der Pfeifen nivelliert sind und somit alle Überlaufkanten in einer gemeinsamen waagrechten Ebene liegen. Weil die Geometrie feststeht, gilt für die Auslegung der genannten Gaskühler die Annahme, dass über dem Pfeifenboden, wie in den Pfeifen eine stationäre Strömung des Gases herrscht und darin die Verteilung des Drucks und der Temperatur wie der Feststoffteilchen aber auch der Kühlflüssigkeit gleichmässig ist. Verkrustete Pfeifenröhren bezeugen, dass diese Annahme rudimentär sind. Ablagerungen und Verkrustungen passieren nämlich nur dann, wenn die Kühlmittelbenetzung der Innenfläche einer Pfeife unzureichend ist.

Der vorliegenden Erfindung liegt die Aufgabe zugrunde, eine Pfeifen- bzw. Rohrbündelquencher zur Kühlung heisser Gase, insbesondere zur Rauch-/ Abgaskühlung in Rauchgasreinigungsanlagen vorzuschlagen, mit welcher die sichere Benetzung der heissgasbeaufschlagten Flächen der Pfeifen, wie die gleichmässige Verteilung der Kühlmittel bei gleichzeitiger Optimierung der Betriebsparameter möglich ist.

Erfindungsgemäß wird die Aufgabe nach Anspruch 1 gelöst. Die Konstruktion der Pfeifen- bzw. Rohrbündelquencher, die zur Kühlung heisser Gase, insbesondere Rauch-/Abgase in Rauchgasreinigungsanlagen dienen, wird so geändert wird, dass der Innenkörper aus einem planen runden Boden besteht, in welchem, in vorzugsweise regelmässigen Abständen, Muffen befestigt sind, die für die Aufnahme und für die Verstellung der den Boden überragenden Enden und somit der Einlaufhöhe des Pfeifenrohres dienen. Dabei wird der Boden mit einem zylindrischen Aussenkörper, vorzugsweise mittels abdichtenden Flanschverbindungen gas- und flüssigkeitsdicht verbunden. Die Pfeifen sind an einem Ende mit in die Rohrmuffe passende Gewinde und stirnseitig mit Schlitzen versehen und tragen am anderen Ende vorzugsweise an einem Paßsitz eine Einlaufkrone. Bei der Installation des Gaskühlers muss der Boden nicht in Wasserwaage gesetzt werden, weil die Pfeifenrohre in den Muffen des Bodens verstellt und so weit geschraubt werden können, dass ihre bodenüberragende Länge dem Kühlmittelstand entspricht. Im Betrieb wird überschüssiges Kühlmittel zugeführt, so dass das heisse Gas beim Verlassen des Gaskühlers die gewünschte Temperatur hat. Entsprechend dem Kühlprinzip wird das heisse Gas mit der Kühlflüssigkeit in den Pfeifenröhren durchmischt, wobei durch die Verdampfung des Kühlmittels der Kühleffekt entsteht. Zur Vermeidung der Krustenbildung muss durch überschüssige Kühlmittelzufuhr dafür gesorgt werden, dass die Innenfläche des Pfeifenrohres nicht austrocknet und ständig mit Kühlmittel benetzt bleibt. Die vorgeschlagene Vorrichtung erlaubt das Ein- und Ausschrauben der jeweiligen Pfeife und somit die Hebung und Senkung der Einlaufkanten, so dass der lokale Zulaufdruck des Kühlmittels das erforderliche Mass erreicht. Durch das Ein- und Ausschrauben des Pfeifenrohres wird die Verstellung der Einlaufkante bewirkt, so dass sich die Menge des Kühlmittels pfeifenweise und so regulieren lässt, dass am Rohraustritt die gewünschte Abkühlung des Gases entsteht. Für die Messung der Temperaturverteilung der Pfeifenrohre eignet sich eine Messlanze, die sich unterhalb des Bodens durch einen Messstutzen des Kühlergehäuses einführen und sich im Bereich des Pfeifenaustrittquerschnitts einzeln, wie reihenweise positionieren lässt.

Im Betrieb wird der Zwischenraum der Pfeifenrohre mit der Kühlflüssigkeit über das Niveau der Einlaufkanten geflutet, so dass das heisse Gas - mindestens theoretisch - nur entlang der benetzten Innenflächen der Pfeifenrohre strömt.

Damit die Wirklichkeit diesen Annahmen entspricht, wird die Kühlmittelzufuhr der einzelnen Pfeifen in Funktion der Austrittstemperatur (T_{KA}) des Kühlers optimiert. Zur Optimierung wird die Austrittstemperatur der einzelnen Pfeifen (T_{Pn}) gemessen, und wenn die Austrittstemperatur der Pfeife (T_{Pn})> (T_{KA}) der Austrittstemperatur des Kühlers entspricht, wird die Einlaufkante der Pfeife tiefer gestellt, bis (T_{Pn})< = (T_{KA}) ist, oder analog, wenn die Austrittstemperatur der Pfeife (T_{Pn})< (T_{KA}) ist, wird die Einlaufkante der Pfeife höher gestellt, bis (T_{Pn})< = (T_{KA}) ist.

Nach einem bevorzugten Merkmal besteht der Aussenkörper der Quenchvorrichtung aus einem faserverstärkten Kunststoff-Aufbau, wobei vorzugsweise Glasfasern, Armid- oder Kohlefasern verwendet werden. Der zylindrische Außenkörper ist nach oben und unten über Flanschverbindungen derart in den Leitungsweg des Gasstromes der Rauchgasreinigungsanalge installiert, dass das heisse Gas von oben in die Vorrichtung einströmt und das kalte Gas die Vorrichtung unten verlässt.

Der Boden des Innenkörpers enthält dabei an seinem Rand die für die Flanschverbindung mit dem Aussenkörper erforderlichen Bohrungen. Zur Verbindung des Bodens mit dem Aussenkörper sind die Muttern im Bodenkörper fest einlaminiert. Die innere Rohrwandung des Aussenkörpers kann mit einem Verschleisshemd versehen sein, welches in vorteilhafter Weise bis in den Bereich der flüssigkeitsgefüllten Pfeifenröhren ragt. Befestigt wird ein solches Verschleisshemd am oberen Verbindungsflansch des Quencheraussenkörpers.

Vorteilhafterweise sind der Boden und die Muffen ebenfalls aus verstärkten Polymeren ausgeführt, wodurch die Anforderungen an Temperaturbeständigkeit und chemischer Beständigkeit in diesem mit Flüssigkeit beaufschlagten Geräteteil erfüllt wird.

Vorteilhafterweise enthält die oberste Harzschicht auf der Innenseite der Pfeifenröhren Keramikpigmente und/oder mineralische Bestandteile, insbesondere SiC und/oder Al₂O₃, wodurch ein zusätzlicher Oberflächenschutz gegen Abrasion erreicht wird.

Vorteilhafterweise werden die Pfeifenröhren aus Kunststoff, vorzugsweise Polypropylen (PP), Polyvinylchlorid (PVC), Polivinylidenfluorid (PVDF), oder Polytetrafluorethylen (PTFE), Ethylen-Chlortrifluorethylen-Copolymerisat (E-CTFE), Tetrafluorethylen/Hexafluorpropylen (FEP) oder Perfluoro-Alkoxylalkan (PFA) ausgeführt, wobei die oberen Einlaufzonen aus einem verschleissfestem Material, insbesondere SiC oder Keramik bestehen und in Form einer Einlaufkrone auf die Röhren aufgesetzt sind, um diese beim Verschleiss einfach wechseln zu können.

Zur optimalen Ausnutzung des verfügbaren Gesamtquerschnittes sind nach einem besonderen Merkmal der Erfindung die Röhren des Innenkörpers mit unterschiedlichen Durchmessern versehen, wodurch ein optimales Verhältnis von Querschnitt zu freier Durchströmfläche hergestellt werden kann.

Das Kühlprinzip besteht darin, dass Gas und Flüssigkeit in den Röhren intensiv durchmischt werden, wobei der Kühleffekt durch Kühlmittelverdampfung bewirkt wird. Aufgrund der guten Antikorrosionseigenschaften der eingesetzten Werkstoffe ist dies an dieser Stelle im Prozess besonders vorteilhaft möglich, insbesondere die Widerstandsfähigkeit gegen die dort partiell und gleichzeitig zur Korrosivität auftretenden hohen Temperaturen.

Der grösste Vorteil der Vorrichtung ist, dass sie die gleichmässige Verteilung der Kühlmittel erlaubt. Die Herstellung, die Handhabung und die perfekte Installation der erfindungsgemässen Vorrichtung ist weitaus kostengünstiger als die bislang bekannten Ausführungen. Die Optimierung des Betriebes erlaubt den nachhaltigen Einsatz eines am jeweiligen Anforderungsprofil genau orientierten Polymers und erlaubt Eingangstemperaturen bis über 220°C. Die vorgeschlagene Bauweise der erfindungsgemässen Vorrichtung ist gegenüber einer Graphitausführung 50 % leichter und billiger.

Die Vorrichtung gemäss der Erfindung kann zweiteilig gefertigt werden, was im Gegensatz zu bekannten Vorrichtungen in Graphitausführung, wesentlich vorteilhafter ist.

Ausserdem wird durch die erfindungsgemässe Ausführung die Montage der Vorrichtung erheblich vereinfacht, da die sonst bei Vorrichtungen aus Graphit erforderlichen Zugspannungen, für die Gewährleistung der Dichtigkeit im Betrieb, hier entfallen. Dadurch besteht nicht mehr die Gefahr eines Gerätebruches durch ungleichmässige Spannungesverteilung.

Dank der Verstellbarkeit der Pfeifen ist der Einsatz der Kunststoffbauweise, besonders wegen Steigerung der Lebensdauer attraktiv. Die Kunststoffbauweise ist wesentlich unempfindlicher in der Handhabung als Graphit oder Keramik. Dank der Verstellbarkeit der Pfeifen ist die Installation einfacher, denn der Gaskühler muss nicht absolut planar in die Anlage eingebaut werden, weil dank der Verstellbarkeit eine Anpassung an die Einlaufebene der Pfeifen an Ort und Stelle möglich ist.

Anhand der Zeichnung wird ein Ausführungsbeispiel der Erfindung schematisch erläutert, darin zeigt die
- Figur 1:: den Querschnitt durch einen Pfeifenquencher
- Figur 2:: das Detail des Bodens mit dem Kühlrohr und der Einlaufkrone.

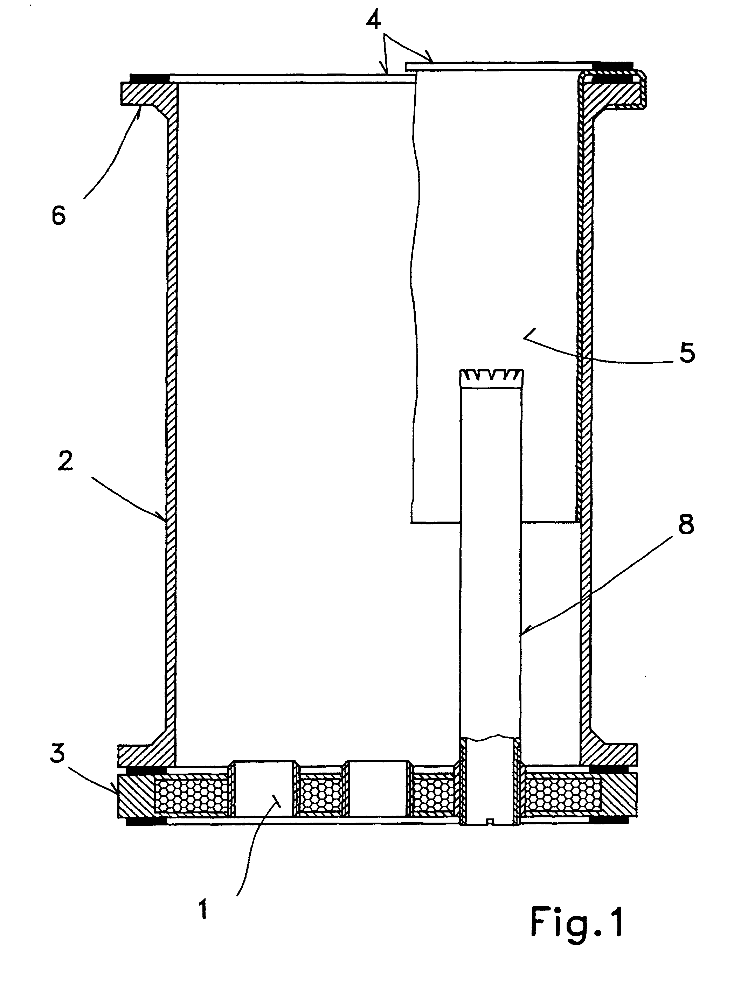

In der Figur 1 ist ein Pfeifen- bzw. Rohrbündelquencher dargestellt. Der zylindrische Aussenkörper 2 ist mittels abdichtenden Flanschverbindungen gas- und flüssigkeitsdicht mit dem Innenkörper verbunden, wobei der Innenkörper aus einem planen runden Boden 3 besteht, in welchem in regelmässigen Abständen, mehrere Muffen 1 befestigt sind. Der Aussenkörper 2 besteht aus einem GFK-Aufbau und zwar je nach Anforderung entweder in Hochtemperatur- oder Normalausführung. Der Aussenkörper 2 ist nach oben und unten über Flanschverbindungen 6 in den Leitungsweg des Gasstromes der Rauchgasreinigungsanalge derart eingebunden, dass das heisse Gas von oben in den Aussenkörper 2 einströmt und das kalte Gas die Vorrichtung durch die in die Muffe 1 eingeschraubten Pfeifen 8 (wovon nur eine dargestellt ist) verlässt.

Der Boden 3 des Innenkörpers ist an seinem Rand mit der Flanschverbindung 6 des Aussenkörpers 2 durch nicht dargestellte Schrauben, die den Flansch und die Dichtungen 4 durchdringen, gas- und wasserdicht verbunden. Die innere Rohrwandung des Aussenkörpers 2 ist mit einem Verschleißhemd 5 (nur angedeutet dargestellt) versehen, welches in vorteilhafter Weise bis in den flüssigkeitsgefüllten Bereich ragt. Befestigt wird ein solches Verschleisshemd 5 am oberen Verbindungsflansch 4 des Aussenkörpers 2.

Der Innenkörper besteht aus dem Boden 3, der als eine steife GFK-Sandwich-Platte ausgeführt ist und zur Aufnahme der Pfeifen 8 mit den in den Boden 3 eingeklebten Muffen 1 dient. Dank dieser Bauweise erfüllt der Innenkörper, der mit der Kühlflüssigkeit beaufschlagt wird, die Anforderungen von Temperatur- und chemischer Beständigkeit.

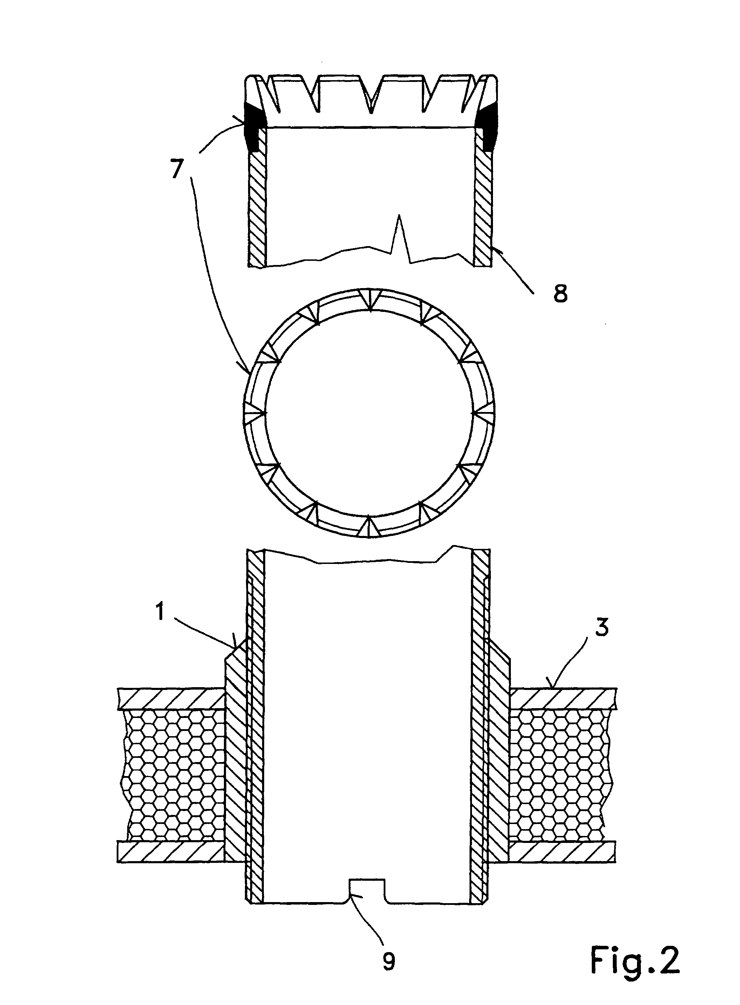

Die Pfeifen 8 des Innenkörpers sind vorzugsweise aus Polypropylen (PP), Polyvinylchlorid (PVC), Polivinylidenfluorid (PVDF) oder Polytetrafluorethylen (PTFE) oder aus SiC und/oder Keramik bestehen, wobei die oberen Einlaufzonen aus einem verschleissfestem Material, insbesondere SiC oder Keramik bestehen und in Form einer Einlaufkrone 7 (siehe Figur 2) auf die Pfeifen 8 aufgesetzt werden. Diese können bei Verschleiss einfach ausgewechselt werden.

## Patentansprüche

1. Vorrichtung zur Kühlung heisser Gase, insbesondere zur Rauch-/Abgaskühlung in Rauchgasreinigungsanlagen, in Form von Pfeifen- bzw. Rohrbündelquenchern, **dadurch gekennzeichnet, dass** ein zylindrischer Außenkörper (2) mittels abdichtenden Flanschverbindungen (3, 4) gas- und flüssigkeitsdicht mit einem Innenkörper verbunden ist, wobei der Innenkörper aus einem planen, runden Boden (3) besteht, in welchem in vorzugsweise regelmässigen Abständen mehrere Muffen (1) eingebunden sind, und dass die Muffen (1) mit einem Innengewinde versehen sind, in die Pfeifen (8) mit Aussengewinde und definierter Gesamtlänge aufgenommen sind.

2. Vorrichtung nach Anspruch 1, **dadurch gekennzeichnet, dass** die Pfeifen (8) für die Aufnahme einer Einlaufkrone (7) dienen.

3. Vorrichtung nach den Ansprüchen 1 und 2 **dadurch gekennzeichnet, dass** die Pfeifenrohre (8) an einem Ende mit in die Rohrmuffe (1) passende Gewinde und stirnseitig mit radialen Schlitzen (9) versehen sind und am anderen Ende in einen Paßsitz enden, der für die Aufnahme der Einlaufkrone (7) dient.

4. Vorrichtung nach den Anspruchen, 1 bis 3 **dadurch gekennzeichnet, dass** der Aussenkörper faserverstärkten Kunststoff Glas- und/oder Armid- und/oder Kohlefasern enthält.

5. Vorrichtung nach wenigstens einem der oben genannten Ansprüche, **dadurch gekennzeichnet, dass** in die oberste Harzschicht der Innenseite des Aussenkörpers (2) und der Pfeifen (8) Keramikpigmente und/oder mineralische Bestandteile, insbesondere SiC und/oder Al₂O₃, eingebracht sind.

6. Vorrichtung nach wenigstens einem der oben genannten Ansprüche, **dadurch gekennzeichnet, dass** der Aussenkörper (2) und die Pfeifen (8) aus Polypropylen (PP), Polyethylen (PE), Polyvinylchlorid (PVC), Polivinylidenfluorid (PVDF) oder Polytetrafluorethylen (PTFE), Ethylen-Chlortrifluorethylen-Copolymerisat (E-CTFE), Tetrafluorethylen/Hexafluorpropylen (FEP) oder Perfluoro-Alkoxylalkan (PFA) bestehen.

7. Vorrichtung nach wenigstens einem der oben genannten Ansprüche, **dadurch gekennzeichnet, dass** die Pfeifen (8) oder die Einlaufkronen (7) aus SiC und/oder Keramik bestehen.

8. Vorrichtung nach wenigstens einem der oben genannten Ansprüche, **dadurch gekennzeichnet, dass** die Pfeifen (8) unterschiedliche Durchmesser aufweisen.

9. Verfahren für die Kühlung heisser Gase, insbesondere Rauchgase, mit einem Pfeifen- bzw. Rohrbündelquencher nach den Ansprüchen 1 bis 8 **dadurch gekennzeichnet, dass** durch die Hebung oder Senkung der Einlaufkante der Pfeife (8) die Überflutung der Pfeifen (8) pfeifenweise geschieht.

10. Verfahren nach Anspruch 9, **dadurch gekennzeichnet, dass** die Hebung oder Senkung der Einlaufkante einer Rohrpfeife (8) in Funktion der Austrittstemperatur im Bereich des Pfeifenaustrittquerschnitts (T_{Pn}) vorgenommen wird.

## Claims

1. A device for cooling hot gases, particularly for cooling flue/waste gas in flue-gas cleaning plants, in the form of pipe or tube bundle quenchers, **characterised in that** a cylindrical outer body (2) is connected in gas-tight and liquid-tight manner to an inner body by means of sealing flanged joints (3, 4), the inner body comprising a planar, circular base (3) in which a plurality of sockets (1) are integrated at preferably regular spacings, and **in that** the sockets (1) are provided with an internal thread in which pipes (8) having an external thread and a defined total length are received.

2. A device according to Claim 1, **characterised in that** the pipes (8) serve to receive an inlet crown (7).

3. A device according to Claims 1 and 2, **characterised in that**, at one end, the pipes (8) are provided with threads fitting in the pipe socket (1) and with radial slots (9) at the end face and, at the other end, terminate in a fitting seat which serves to receive the inlet crown (7).

4. A device according to Claims 1 to 3, **characterised in that** the outer body contains fibre-reinforced plastics material, glass fibres and/or aramide fibres and/or carbon fibres.

5. A device according to at least one of the preceding claims, **characterised in that** ceramic pigments and/or mineral constituents, particularly SiC and/or Al2O3, are incorporated in the upper resin layer on the inside of the outer body (2) and the pipes (8).

6. A device according to at least one of the preceding claims, **characterised in that** the outer body (2) and the pipes (8) are made of polypropylene (PP), polyethylene (PE) polyvinyl chloride (PVC), polyvinyl fluoride (PVDF) or polytetrafluoroethylene (PTFE), ethylenechlorotrifluoroethylene copolymer (E-CTFE), tetrafluororethylene-hexafluoropropylene (FEP) or perfluoro-alkoxyalkane (PFA).

7. A device according to at least one of the preceding claims, **characterised in that** the pipes (8) or the inlet crowns (7) are made of SiC and/or ceramics.

8. A device according to at least one of the preceding claims, **characterised in that** the pipes (8) have different diameters.

9. A process for cooling hot gases, particularly flue gases, by means of a pipe or tube bundle quencher according to Claims 1 to 8, **characterised in that**, by raising or lowering the inlet edge of the pipe (8), the pipes (8) are flooded pipe-by-pipe.

10. A process according to Claim 9, **characterised in that** the raising or lowering of the inlet edge of a pipe (8) is carried out as a function of the exit temperature in the region of the pipe-exit cross-section (T_{Pn}).

## Revendications

1. Dispositif pour le refroidissement de gaz chauds, en particulier pour le refroidissement de fumées/gaz d'échappement dans les installations de purification des gaz de fumée, sous la forme d'extincteurs à faisceaux tubulaires ou de tuyaux d'orgue,
**caractérisé en ce qu'**un corps externe cylindrique (2) est raccordé au moyen de raccordements à bride (3, 4) rendus étanches aux liquides et aux gaz avec un corps interne, le corps interne consistant en un fond rond plan (3) dans lequel, dans des espacements de préférence réguliers, sont insérés plusieurs manchons (1), et **en ce que** les manchons (1) sont munis d'un filetage interne, et sont reçus dans les tuyaux d'orgue (8) sur le filetage externe et sur une longueur définie.

2. Dispositif selon la revendication 1,
**caractérisé en ce que** les tuyaux d'orgue (8) servent à la réception d'une couronne d'entrée (7).

3. Dispositif selon les revendications 1 et 2, **caractérisé en ce que** les tuyaux d'orgue (8) sont munis, sur une extrémité, d'un filetage adapté au manchon tubulaire (1) et, sur le côté frontal, de fentes radiales (9), et sur l'autre extrémité, se terminent dans un siège adapté qui sert à recevoir la couronne d'entrée (7).

4. Dispositif selon les revendications 1 à 3,
**caractérisé en ce que** le corps externe contient une matière synthétique renforcée par des fibres, des fibres de verre et/ou d'armide et/ou de carbone.

5. Dispositif selon l'une des revendications précitées,
**caractérisé en ce que**, dans la couche de résine supérieure du côté interne du corps externe (2) et des tuyaux d'orgue (8), sont implantés des pigments de céramique et/ou des composants minéraux, en particulier SiC et/ou Al₂O₃.

6. Dispositif selon l'une des revendications précédentes,
**caractérisé en ce que** le corps externe (2) et les tuyaux d'orgue (8) sont en polypropylène (PP), polyéthylène (PE), chlorure de polyvinyle (PVC), fluorure de polyvinylidène (PVDF) ou polytétrafluoroéthylène (PTFE), éthylène-chlorotrifluoroéthylène-copolymérisat (E-CTFE), tétrafluoroéthylène/hexafluoropropylène (FEP) ou perfluoroalcoxyalcane (PFA).

7. Dispositif selon l'une des revendications précitées,
**caractérisé en ce que** les tuyaux d'orgue (8) ou les couronnes d'entrée (7) consistent en SiC et/ou céramique.

8. Dispositif selon l'une des revendications précédentes,
**caractérisé en ce que** les tuyaux d'orgue (8) présentent des diamètres différents.

9. Procédé pour le refroidissement de gaz chauds, en particulier de gaz de fumée, avec un extincteur à faisceaux tubulaires ou tuyaux d'orgue selon les revendications 1 à 8,
**caractérisé en ce que**, par le levage ou l'abaissement du bord d'entrée du tuyau d'orgue (8), s'effectue la submersion des tuyaux d'orgue (8) tuyau par tuyau.

10. Procédé selon la revendication 9,
**caractérisé en ce que** le levage ou l'abaissement du bord d'entrée d'un tuyau d'orgue (8) s'effectue en fonction de la température de sortie dans la zone de la section transversale de sortie du tuyau d'orgue (T_{Pn}).
